# EUROPEAN PATENT SPECIFICATION

(11) **EP 4 176 299 B1**
(45) Date of publication and mention of the grant of the patent: **03.09.2025**
(21) Application number: 21740262.7
(22) Date of filing: 01.07.2021
(51) Int. Cl.: G02B 21/00

(54) **RE-SCAN OPTICAL SYSTEMS AND METHODS**
OPTISCHE SYSTEME UND VERFAHREN FÜR RESCAN
SYSTÈMES ET PROCÉDÉS OPTIQUES DE RÉBALAYAGE

(30) Priority: 03.07.2020 NL 2026002
(43) Date of publication of application: 10.05.2023
(73) Proprietor: Confocal.nl B.V., 1098 XG Amsterdam (NL)
(72) Inventor: MANDERS, Erik Martinus Marie, 1098 XG Amsterdam (NL); LAMPAERT, Stefan Georges Emile, 1098 XG Amsterdam (NL)
(74) Representative: De Vries & Metman
(86) International application number: PCT/NL2021/050415
(87) International publication number: WO 2022/005286

(56) References cited:
- WO-A1-2018/226836
- CA-A1- 2 973 361
- US-A1- 2002 141 051

## Description

### FIELD OF THE INVENTION

This disclosure relates to re-scan optical systems and methods, in particular to such systems and methods wherein the so-called static sample light path of the re-scan system is provided with a prism and/or wherein the optical system comprises one or more optical elements for causing at least two foci in the static sample light path.

### BACKGROUND

A re-scan confocal microscope is known from De Luca GM, Breedijk RM, Brandt RA, et al. Re-scan confocal microscopy: scanning twice for better resolution. Biomed Opt Express. 2013;4(11):2644-2656. Published 2013 Oct 25. doi:10.1364/BOE.4.002644*,* hereinafter referred to as "De Luca". This microscope has two units: 1) a standard confocal microscope with a set of scanning mirrors which have double function: scanning the excitation light and de-scanning the sample light, and 2) a re-scanning unit that "writes" the light that passes a pinhole onto a camera. By controlling the ratio of the angular amplitude of the respective scanning mirrors and re-scanning mirrors, the properties of the microscope can be controlled. US 2002/141051 A1 relates to re-scan optical system that relies on two separate mirrors for de-scanning and re-scanning, respectively, and comprises a static light path running from the de-scanning mirror to the re-scanning mirror.

In such a re-scan system it is important that the scanning and re-scanning mirrors perform synchronized movements. Preferably, each sweep of the scanning mirror exactly begins, respectively ends, at the same time as a corresponding sweep of the re-scanning mirror begins, respectively ends. If the scanning and re-scanning mirror move asynchronously, the obtained image will have a low quality. As will be understood, at higher scan speeds, the mirrors move faster and the acceptable margin of absolute error for the synchronization becomes smaller. Since the degree of synchronization of the mirrors in the system of De Luca is limited, the scan speed is also limited.

In order to overcome such synchronization problems, a single scanning mirror may be used both for scanning the excitation light, more generally referred to as illumination light, and for re-scanning the fluorescent light, more generally referred to as sample light. For example, Roth et al.: Optical photon reassignment microscopy (OPRA). Optical Nanoscopy 2013 2:5*,* hereinafter referred to as "Roth", disclose an optical photon reassignment microscope. In this microscope, a laser emits 488nm illumination light that is directed to a dichromatic beam splitter, which reflects the illumination light onto a scanning unit. The scanning unit scans the illumination light onto an objective, which focuses the illumination light onto a sample. The returning fluorescent light is then directed back to the scanning unit and de-scanned. Subsequently, the fluorescent light is separated from the illumination light using the dichromatic beam splitter. After this separation, the fluorescent beam passes through an adjustable detection pinhole which can be used to achieve confocal sectioning. The pinhole is positioned between two lenses which expand the fluorescent beam. After expansion, the fluorescent beam is re-scanned using the same scanning system and projected via a lens to a camera.

A disadvantage of the latter microscope set-up is that, because the same scanning system is used for both scanning and re-scanning, the optical set-up is quite large. The de-scanned fluorescent light beam is namely guided all the way around the scanning system and then directed onto the scanning system which re-scans the fluorescent light beam onto the camera. Therefore, there is a need in the art for more compact optical re-scanning systems.

### SUMMARY

Therefore, one aspect of this disclosure relates to a re-scan optical for scanning a sample light spot over an imaging plane of an imaging system in order to form an image of a sample. The system comprises an illumination optical system for directing, and optionally focusing, illumination light at the sample therewith providing an illumination light spot at the sample. The illumination light spot causes sample light. The system further comprises a detection optical system for focusing at least part of the sample light onto an imaging plane of an imaging system herewith causing a sample light spot on the imaging plane. The system further comprises a light directing element for scanning the illumination light spot over and/or through the sample and de-scanning the sample light from the sample and scanning the sample light spot over said imaging plane of the imaging system. The detection optical system is configured to direct the de-scanned sample light along a light path running from the light directing element back to the light directing element so that the light directing element can perform said scanning of the sample light spot over said imaging plane. Further,
- the light path is provided with a prism configured to invert and/or revert the sample light, and/or
- the re-scan optical system comprises one or more optical elements that is or are configured to cause at least two foci of the sample light in said light path, and/or
- the light path is provided with a sample light deflecting prism configured to deflect the sample light without inverting the sample light and/or configured to deflect the sample light without reverting the sample light.

If the re-scan optical system comprises said one or more optical elements that is or are configured to cause at least two foci of the sample light in said light path, then preferably the light path is provided with these one or more optical elements, for example in the sense that these one or more optical elements are positioned in said light path.

The light path may be understood to be configured to revert and/or invert the sample light an appropriate number of times so that the sample light spot is scanned in the correct direction over the imaging plane of the imaging system. What is the correct direction will be explained in more detail below.

Moving the illumination light spot over the sample may also be referred to as scanning. Moving the sample light spot over the imaging plane of the imaging system may also be referred to as re-scanning. In re-scan optical systems, using the same mirror for scanning as well as re-scanning, enables to prevent synchronization problems. If two separate mirrors are used for scanning and re-scanning respectively, then these two mirror may, for some reason, move out of sync, which deteriorates the obtained images as explained in the background section.

The inventor has realized that it is not possible to implement an arbitrary number of mirrors in an optical re-scan system in which the scan mirror and re-scan mirror cannot be moved independently from each other. This is for example the case when the scan mirror and re-scan mirror are the same mirror and/or when there is some mechanical connection between the scan mirror and re-scan mirror. The scan mirror and re-scan mirror may be mechanically connected in the sense that the scan mirror is formed by one reflective surface of a more-sided, e.g. double-sided, reflector and the re-scan mirror is formed by another reflective surface of this more-sided, e.g. double sided, reflector.

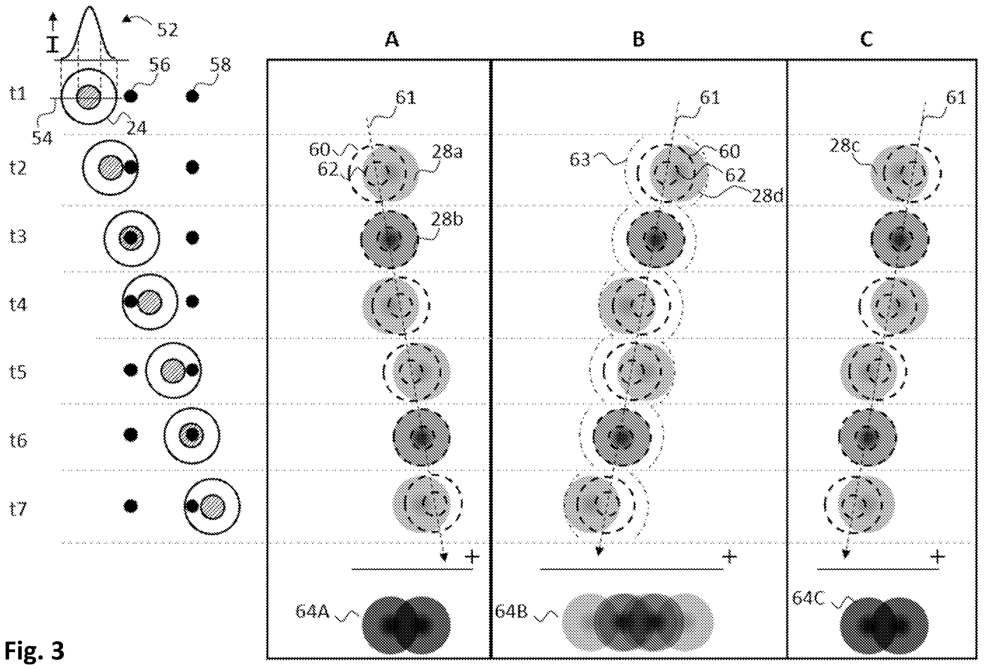

As will be explained below, in a re-scan system, it is important that the sample light spot is scanned over the imaging plane in the correct direction. This principle will now be explained with reference to figure 3. The left hand side of this figure schematically shows what happens at the sample 22 when the illumination light spot 24 is scanned over or through it. The illumination light spot 24 is not infinitely small but has a spatial light intensity distribution, due to, amongst other things, the limited numerical aperture of the illumination system. The exemplary light distribution of the illumination light spot has a high intensity at its center and lower intensity away from the center. Graph 52 schematically shows, as an example, the intensity I along line 54.

Figure 3 shows row by row how the illumination light spot 24 is scanned from left to right over particles 56 and 58. Each row shows at a particular time instance, t1, t2, t3, t4, et cetera, the position of the illumination light spot with respect to the particles 56 and 58. Herein, t1 precedes t2, t2 precedes t3, t3 precedes t4 et cetera. First, particle 56 is illuminated and then particle 58. These particles, upon being illuminated, are excited and subsequently emit sample light 28. In an embodiment, the particles 56 and 58 are fluorescent particles and the sample light 28 is fluorescent light.

As said, the illumination light spot 24 possesses a spatial light intensity distribution, in this example the intensity distribution has a higher intensity at its center and lower intensities at its edges. Therefore, when this illumination light spot 24 moves over a fluorescent particle, this particle will first be illuminated with a lower intensity, then with a high intensity, and then again with a lower intensity.

The right hand side of the figure schematically shows three different examples A, B, C of what can happen on the imaging plane 44 of the imaging system 46 at each time instance. Each row shows for a particular time instance the sample light 28 as present on the imaging plane. In principle, the lower the intensity with which a particle is illuminated, the lower the intensity of the resulting sample light from this particle. This is reflected in figure 3 in that the resulting sample light 28a (t1) has a lower intensity than the sample light 28b (t3). Lighter color tones indicate lower intensities in the figures.

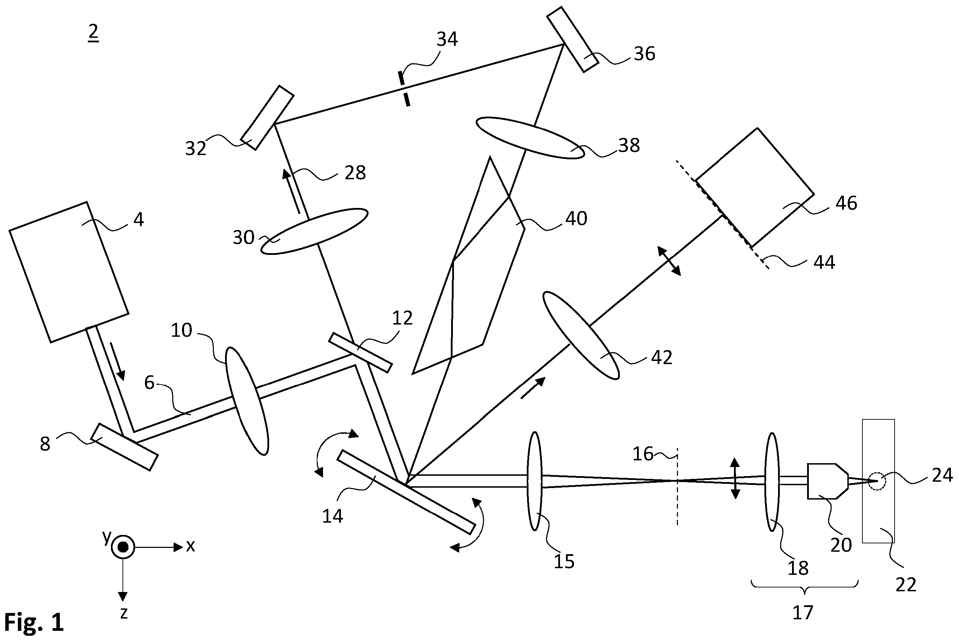

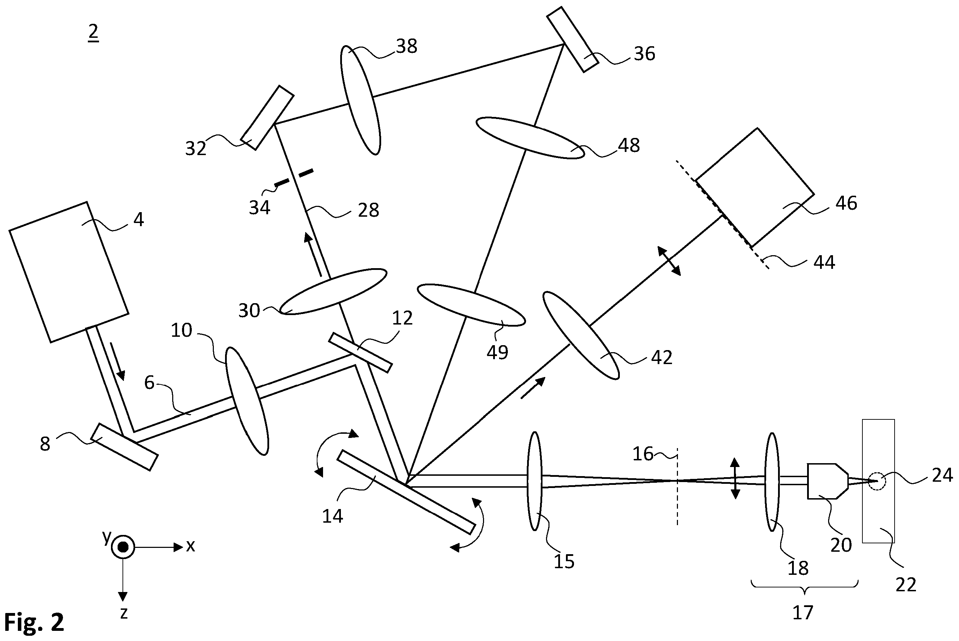

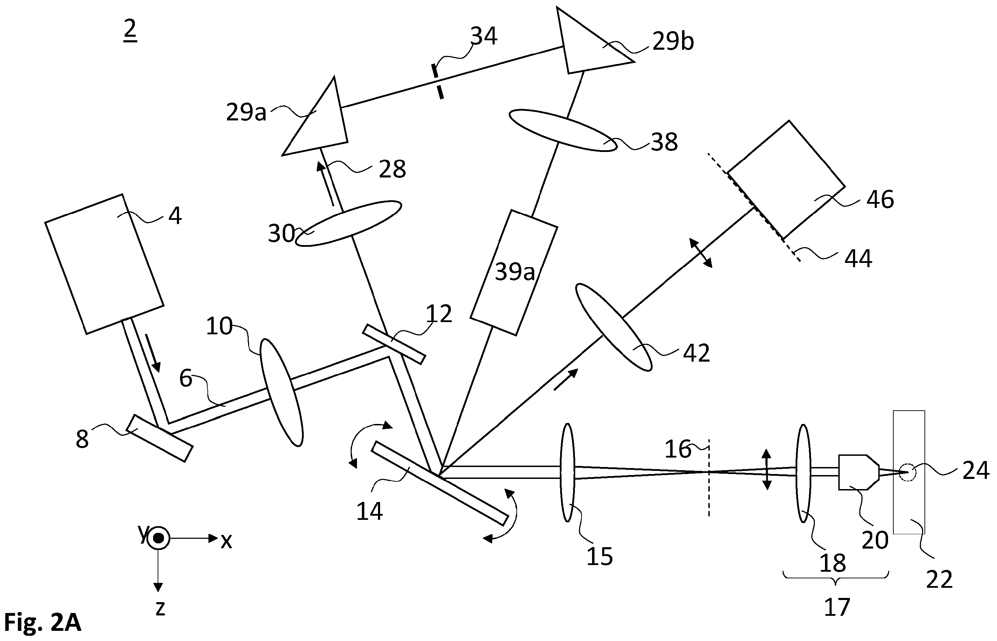

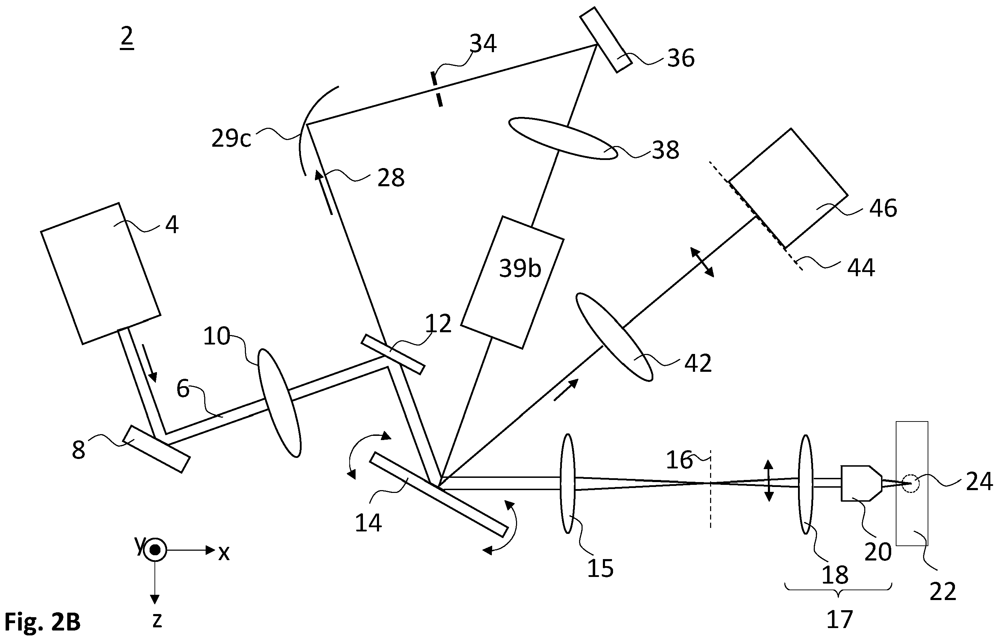

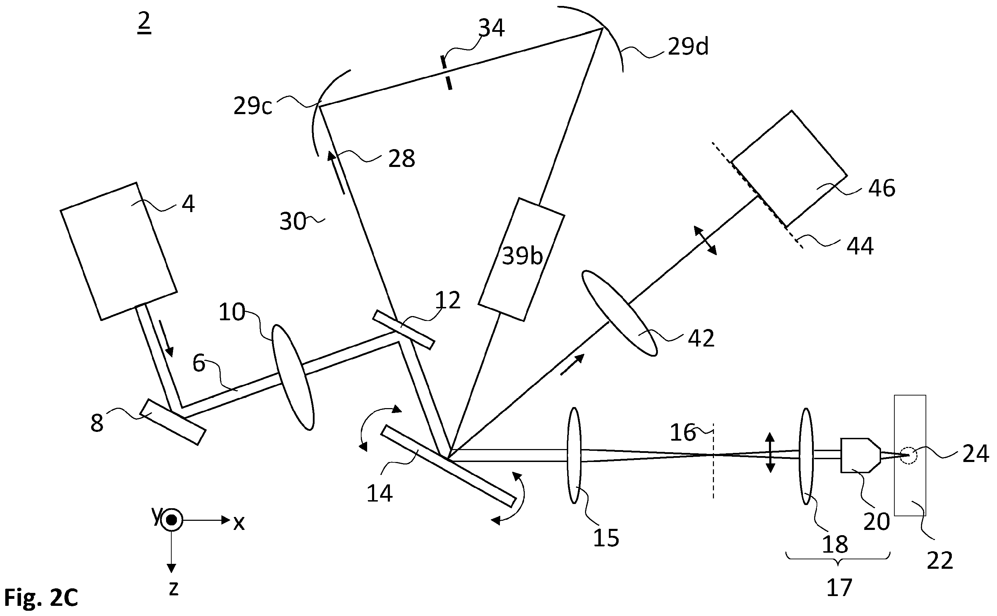

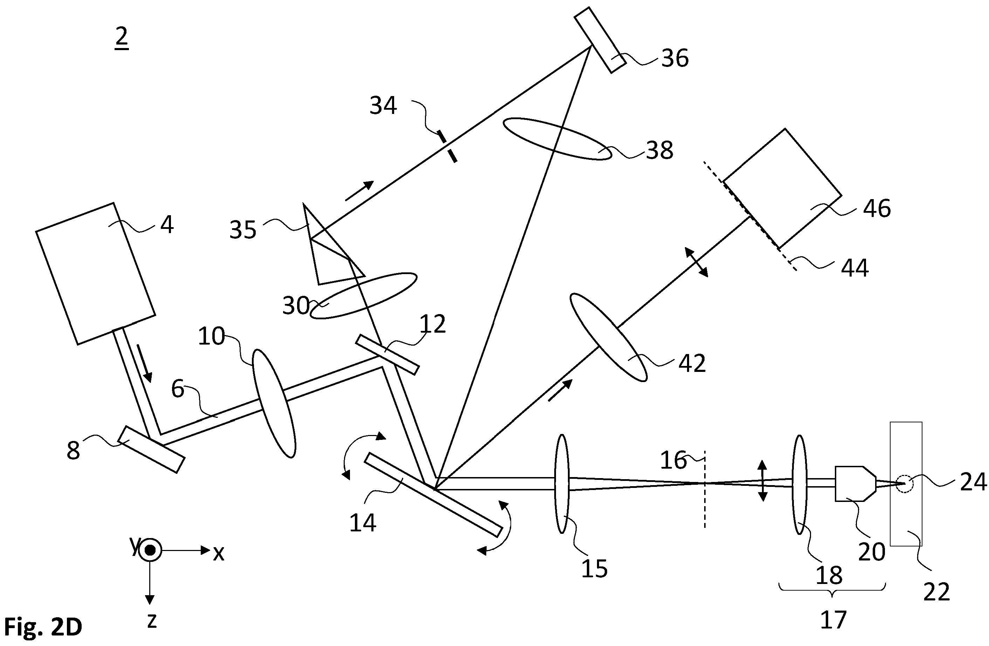

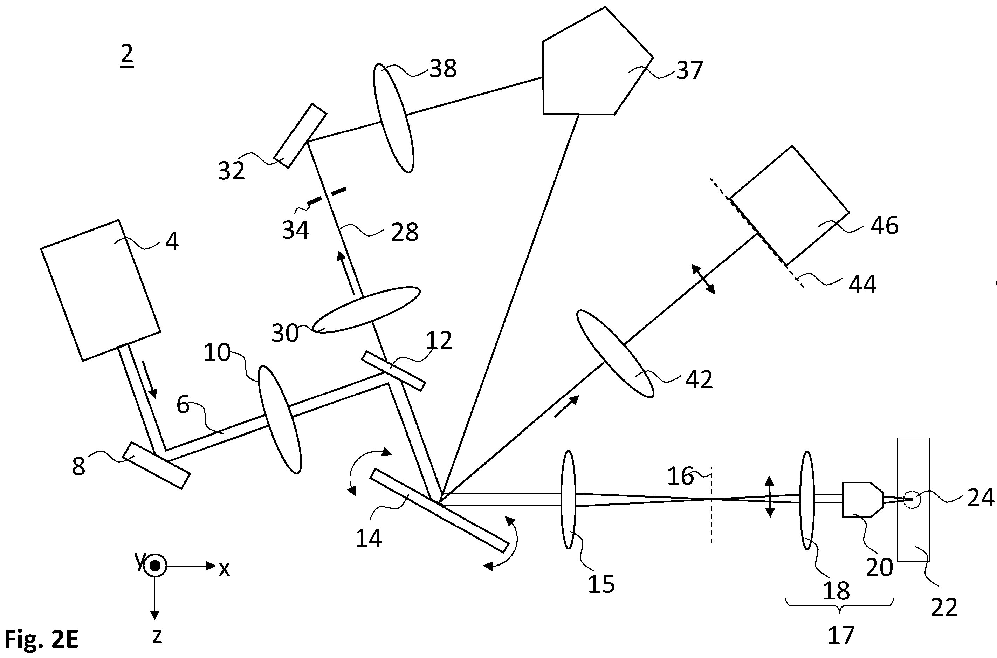

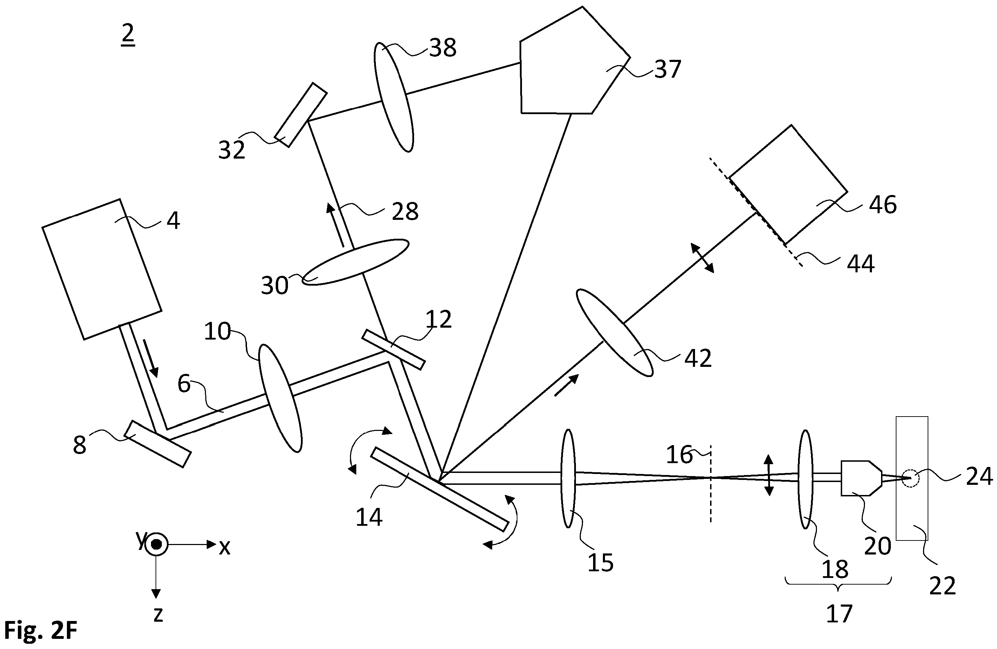

Figure 3 also shows the image 60 of the illumination light spot 24 on the imaging plane. This image may also be referred to as the illumination light spot image. The illumination light spot image 60 is positioned on the imaging plane 44 where a reflection of the illumination light spot from the sample would be positioned, were it not that the illumination light is blocked by a filter that only passes sample light. In figures 1 and 2 such filter is embodied as the dichroic mirror 12. "Image of the illumination light spot" should not be understood as that indeed illumination light is incident on the imaging plane 44 of the imaging system 46. Center 62 of the illumination light spot image 60 indicates the center of the image and may thus be understood to be the "image" of the high intensity center region in illumination light spot 24.

Further, center 62 is also the center of what may be referred to herein as the sample light spot 63. For clarity, the sample light spot 63 is only indicated in column B, in truncated form. The sample light spot at a given time may be understood to cover the region on the imaging plane that would receive sample light if the entire illuminated part of the sample would emit sample light at that given time. The sample light spot is not infinitely small and also exhibits a spatial light intensity distribution. Further, it should be understood that this light intensity distribution varies as the illumination light spot 24 moves over and/or through the sample. To illustrate, if the illumination light spot 24 does not illuminate any photo-excitable particle, then the intensity of the sample light spot is zero everywhere throughout its spatial distribution. This situation for example occurs at time t1, where the illumination light spot 24 has not yet reached particle 56. On the other hand, if the illumination light spot 24 illuminates a particle in a sample with its maximum intensity, i.e. if the high intensity part, e.g. the center, of the illumination light spot 24 covers the particle, then the sample light spot has a relatively high intensity. This for example happens at time t3 at which the center of the illumination light spot 24 illuminates particle 56 and at time t6 at which the center of the illumination light spot 24 illuminates particle 58. Further, at time t2, the illumination light spot 24 weakly illuminates particle 56, which gives rise to so called off-axis sample light 28 in the imaging plane. At t2, the sample light spot 63 exhibits an asymmetric light intensity distribution in the sense that sample light 28d is not concentric with the sample light spot 63. In re-scan optical systems, the direction in which the image 60 of the illumination light spot and thus the direction in which the sample light spot moves over the imaging plane, should be selected taking into account the illumination light spot's direction of movement over and/or through the sample as well as the orientation of the image of the illumination light spot 60 at the imaging plane 44, which may also referred to as the orientation of the sample light spot.

The sample light spot 63 (and thus illumination light spot image 60) is scanned over the imaging plane, in example A from left to right and in examples B and C from right to left. The arrows 61 serve as a guide to the eye in order to show that the sample light spot moves at a constant velocity over the imaging plane.

At any given time, if the illumination light spot 24 is approaching (respectively moving away from) an arbitrary particle that is being illuminated at that given time which causes, at that given time, sample light 28 at a certain position in the imaging plane, then the image 60 of the illumination light spot (and the sample light spot 63) should also approach (respectively move away from) that certain position. Herein, the arbitrary particle that is being illuminated at the given time is typically illuminated by a low intensity edge of the illumination light intensity distribution.

It may thus be understood that, at any given time, the illumination light spot's direction of movement relative to an illuminated particle that causes sample light at a certain position in the imaging plane at the given time, should thus substantially be the same as the direction of movement of the image 60 of the illumination light spot (and the sample light spot 63) relative to said certain position in the imaging plane.

The illumination light spot 24 may be understood to approach respectively move away from a particle if a center of the illumination light spot 24 approaches respectively moves away from the particle. Similarly, the illumination light spot image 60 (and sample light spot 63) may be understood to approach respectively move away from a position in the imaging plane if a center 62 of the illumination light spot image 60 and sample light spot approaches respectively moves away from that position. One element approaching respectively moving away from another may be understood to be any relative movement from the one element to the other that reduces respectively increases the distance between them. Thus, "approaching a particle" should not be construed as being limited to "moving straight towards the particle". An illumination light spot that is going to pass by a particle at a distance, meaning that the center of the illumination light spot will not cover that particle, may also be referred to as an illumination light approaching that particle.

The sample light spot's 63 direction of movement in examples A (left to right) and C (right to left) is correct, whereas it is incorrect for example B (right to left). This can be determined based on the above principles. In example A, at t2, the illumination light spot 24 illuminates particle 56. As a result, at the imaging plane 44, sample light 28a appears at the imaging plane at a certain position that at t2 is on the right of the center 62 (of both the illumination light spot image 60 and the sample light spot 63). At t2, the illumination light spot 24 is approaching particle 56. Therefore, the correct direction of movement for the illumination light spot image 60 and sample light spot 63 in the imaging plane is towards the position where sample light 28a appears, i.e. to the right.

For each example, an aggregate spatial intensity distribution 64 in the imaging plane 44 is shown. The aggregate spatial intensity distribution 64A for A shows that the image does not suffer from significant distortions. However, it may be problematic to distinguish the two particles 56 and 58 from the result 64A, because there seems to be a single high intensity region in the center of the aggregate light distribution 64A and not two separate high intensity regions. Example A corresponds to the case wherein the optical system exhibits a sweep factor M=1 as described in De Luca and as shown in figure 1B/1C of De Luca.

Example B differs from example A in that the illumination light spot image 60 moves in the opposite direction (right to left), whereas the orientation of the illumination light spot image 60 (and thus the orientation of the sample light spot 63) is the same for both examples A and B. As a consequence, the aggregate light intensity distribution 64B is highly distorted. Of course, this effect is even worse when many particles are illuminated at the same time.

Example C differs from example A in that the sample light spot 60 moves in the opposite direction (right to left) and in that the orientation of the sample light spot 63 is different. In example C the orientation of the sample light spot is reverted (or inverted depending on how the horizontal plane is defined) with respect to the sample light spot of example A. This causes the sample light 28c to be positioned left from the sample light spot's center 62, whereas for A the sample light 28a is positioned right from the sample light spot's center 62. Example C yields the same result as example A in terms of image quality. However, the aggregate light distribution 64C is reversed/inverted with respect to aggregate light distribution 64A. Example C also corresponds to the case wherein the system exhibits a sweep factor M=1 as described in D Luca.

In light of the above, it is clear that the orientation of the illumination light spot image 60 at the imaging plane 44 plays an important role. After all, the illumination light spot image in the imaging plane 44 may be reversed and/or inverted with respect to the sample light generated by the sample. The orientation of the sample light spot 63 influences where the sample light 28 is positioned with respect to sample light spot 63, in particular with respect to center 62 of sample light spot 63. The sample light 28 may for example be positioned right or left from the center 62 depending on the number of reversions. A reversion, also referred to as an x-flip, may be understood to be a rotation of 180 degrees around a vertical line. The sample light may for example be positioned below or above the sample light spot's center depending on the number of inversions. An inversion, also referred to as a y-flip, may be understood to be a rotation of 180 degrees around a horizontal line. As explained above, the position of the sample light with respect to the illumination light spot image determines in which direction the illumination light spot image should move, given a certain direction of movement for the illumination light spot.

When the re-scan optical system comprises separately controllable scanning and re-scanning mirrors, as for example the system shown in De Luca, then the appropriate scanning and re-scanning directions can be easily achieved. If resulting images are highly distorted, then probably the illumination light spot image is moved incorrectly. In such case, one would simply need to revert the movement of one of the mirrors in order to achieve correct, high quality imaging.

Unfortunately, such a correction is not possible when the scanning mirror and re-scanning mirror cannot be controlled separately, for example because the system comprises a mirror that is both used as scanning mirror and re-scanning mirror. If separate control is not possible, then a certain movement of the illumination light spot over and/or through the sample corresponds one to one to a movement of the illumination light spot image over the imaging plane of the imaging system.

A typical re-scan system has two dynamic paths and two static paths. The first dynamic path may be understood to be the light path from scanning mirror to the sample and back to the scanning mirror again. The second dynamic path may be understood to be the light path from the re-scanning mirror to the imaging plane. The first static light path may be referred to as the static illumination path and may be understood to be the light path that the illumination light follows from the light source to the scanning mirror. The second static light path may be referred to as the static sample light path and may be understood to be the light path that the sample light follows from the scanning mirror to the re-scanning mirror again. Thus, in case the same mirror is used for scanning and re-scanning the static path is the path that the sample light follows from the (re)scanning mirror back onto the (re)scanning mirror again. If in this disclosure, reference is made to "the light path", it means the static sample light path, unless otherwise indicated or unless it is clear from the context that another light path is meant.

If it turns out that a re-scan system that comprises a single mirror as scanning and re-scanning mirror, moves the sample light spot in the wrong direction, then adding a mirror in a dynamic path of the system does not solve the problem. After all, if a mirror is added in a dynamic path, then not only causes this mirror an additional orientation change of the sample light spot, it also flips the (re)scan direction. Clearly, an incorrect pair of (i) scan direction and (ii) orientation of the sample light spot cannot be remedied by reverting both the scan direction and the orientation of the sample light spot.

Based on the above considerations about the orientation of the sample light and the scan direction, redesigning the optical setup of Roth to reduce its size is not straightforward. It is for example not possible to simply redesign the static path and remove a mirror. As explained above, this would yield distorted images because it changes the orientation of the illumination light spot image 60 in the imaging plane without changing the direction of movement of the illumination light spot image 60 in the imaging plane. As a consequence, the direction of movement of the illumination light spot image 60 would be incorrect.

The inventor has realized that a more compact optical setup is possible by implementing a prism and/or at one or more optical elements for forming at least two foci in the static sample light path and/or sample light deflecting prism configured to deflect the sample light without inverting and/or reverting the sample light. These measures namely obviate the need to implement a third mirror in the static sample light path and enable compact optical set-ups. It should be appreciated that, of course, in theory, mirrors can be placed close together in order to make the optical system more compact. However, in practice, this is very cumbersome and technically challenging. In practice, if many mirrors are positioned very close to each other, then often the support structure of one mirror blocks the light bundle that reflects from the other. Also, the more mirrors are present in the static path, the more difficult it is to correctly align them. To illustrate, if the sample light in the static sample light path reflects from a first mirror, then from a second mirror and then from a third mirror to the re-scanning mirror, then the correct orientation of the third mirror is dependent on both the orientation of the first mirror and the orientation of the second mirror. If, instead of the third mirror, a prism is for example implemented after the second mirror, or a pair of lenses, then only the first and second mirror have to be properly aligned and the prism or lens pair can simply be placed in the light path between the second mirror and re-scanning mirror. Preferably, such prims or lens pair does not change the direction of the sample light in the sense that light that is incident on a prism/lens pair has the same propagation direction when it hits the prism/lens pair as when it leaves the prism/lens pair. Hence, implementing a prism and/or optical elements, such as lenses for creating at least two foci, enables to reduce the size of the re-scan optical system and at the same time simplify the optical setup.

Preferably, the sample light, throughout its journey along the static sample light path, is reversed an even number of times, e.g. zero times or two times or four times or six times, and not an uneven number of times, e.g. not three times, if such reversions cause the orientation of the sample light spot to flip around a line perpendicular to a scanning direction of the sample light spot, said line lying in the imaging plane of the imaging system.

Preferably, the sample light, throughout its journey along the static sample light path, is inversed an even number of times, e.g. zero times or two times or four times or six times, and not an uneven number of times, e.g. not three times, if such inversions cause the orientation of the sample light spot to flip around a line perpendicular to a scanning direction of the sample light spot, said line lying in the imaging plane of the imaging system.

To illustrate, if the sample light spot is scanned in only one direction, as may for example be the case if the illumination light spot is line-shaped and covers the entire to be investigated sample, and if a reversion (resp. inversion) of the sample light in the static sample light path causes the orientation of the sample light spot to flip around a line that is perpendicular to said scan direction, said line lying in the imaging plane of the imaging system, and if an inversion (resp. reversion) of the sample light in the static sample light path causes the orientation of the sample light spot to flip around a second line parallel to said scan direction, said second line lying the imaging plane as well, then the number of reversions (resp. inversions) of the sample light in the static sample light path should be even, e.g. zero or two, and the number of inversions (resp. reversions) in the static sample light path may be any arbitrary number.

As another example, if the sample light spot is scanned in two directions, x and y, as may for example be the case if the illumination light spot is circular-shaped and is scanned in the x and y direction over the to be investigated sample, and if a reversion (resp. inversion) of the sample light in the static sample light path causes the orientation of the sample light spot to flip around a line perpendicular to the x direction, said line lying in the imaging plane of the imaging system, and if an inversion (resp. reversion) of the sample light in the static sample light path causes the orientation of the sample light spot to flip around a second line perpendicular to the y direction, said second line lying the imaging plane as well, then the number of reversions of the sample light in the static sample light path should be even, e.g. zero or two, and the number of inversions in the static sample light path should be even as well.

A reversion (resp. inversion) in the static sample light path is for example achieved by a reflection of the sample light from a mirror. A point focus in the static sample light path causes both a reversion and inversion of the sample light. A line focus in the static sample light path causes either a reversion or inversion of the sample light, depending on the orientation of the line focus and assuming that the line focus is not oriented such that it flips the orientation of the sample light spot around a line that is at a non-90 degrees, nonzero degrees, angle with respect to the scan direction. Such a line focus may for example be achieved by providing the static path with two cylindrical lenses. Preferably, the at least two foci that are caused by the one or more optical elements, cause at least two reversions or cause at least two inversions. For example, if there are two and only two foci caused by the optical elements, one focus may be a line focus and another focus may be a point focus. The two foci may for example also be two line foci that both cause a reversion of the sample light. The two foci may for example be two line foci that both cause an inversion of the sample light. The two foci may also be two point foci.

The light directing element may be a movable reflector configured to reflect the illumination light and the sample light, such as a movable mirror. The reflector may be movable in the sense that it can rotate around an axis of rotation. Additionally or alternatively, the light direction element may be an acousto-optic modulator (AOM) or an electro-optic modulator (EOM). Such deflectors can be used as reflectors having a controllable direction of reflection.

The light directing element may be understood to be configured to scan the illumination light spot over and/or through the sample and simultaneously de-scan the sample light from the sample and simultaneously scan the sample light spot over said imaging plane of the imaging system. Note that scanning the sample light spot over the imaging plane may be referred to as re-scanning. Of course, as used herein, if two events, such as scanning the illumination light spot and re-scanning the sample light spot (that resulted from scanning the illumination light spot) are said to be simultaneous then in fact they may occur shortly after one another due to the non-infinite speed of light and for example due to photo-excited molecules in the sample remaining excited for some time before they decay and emit a photon. This is for example the case with scanning and re-scanning because the sample light has to travel from sample via the static path to the re-scanning mirror.

It should be appreciated that one or more, e.g. all, of the at least two foci may be a line focus. Additionally or alternatively, one or more, e.g. all, of the at least two foci may be a point focus. A point focus may be understood to both revert and invert the sample light, whereas a line focus only reverts or only inverts the sample light, depending on the orientation of the line focus.

Preferably, the prism that is configured to invert and/or revert the sample light is a prism that is configured to provide inline inversion or reversion of the sample light. This may be understood as that the propagation direction of the sample light that hits the prism is the same as the propagation direction of the sample light that leaves the prism and/or as that the propagation direction of the sample light leaving the prism is not laterally displaced with respect to the propagation direction of the sample light hitting the prism. "Lateral" may be understood to be a direction perpendicular to the propagation direction of light.

Preferably, the one or more optical elements also provide inline inversion and/or reversion. Further, preferably, the one or more optical elements are transmissive optical elements in the sense that they are transmissive to at least the wavelength of interest, i.e. the wavelength of the sample light.

Any optical element described herein, such as the sample light deflecting prisms, that are configured to deflect sample light may be understood to change the propagation direction of the sample light. This may be understood as that sample light has a first propagation direction just before it hits the optical element, however, has a second propagation direction different from the first propagation direction when it has just exited the optical element.

Optionally, the re-scan system comprises a light source, for example a light source as described herein. Optionally, the re-scan optical system comprises a microscope system, for example a microscope system as described herein. Optionally, the re-scan optical system comprises an imaging system, for example an imaging system as described herein.

In an embodiment, the light path is provided with
- two, and only two, lenses and
- two, and only two, mirrors for reflecting the sample light and
- said prism that is configured to invert and/or revert the sample light.

This embodiment advantageously ensures that the sample light spot is scanned in the correct direction.

In an embodiment, the prism that is configured to invert and/or revert the sample light is a Dove prism. This is advantageous, because it can be easily aligned and a Dove prism does not change the direction of the light path.

In an embodiment, the prism that is configured to invert and/or revert the sample light is a Pechan prism.

The prism that is configured to invert and/or revert the sample light may also be a Schmidt-Pechan prism, an Abbe-Koenig prism, Porro-Abbe prism, or double Porro prism.

In an embodiment, the light path is provided with a sample light deflecting prism configured to deflect the sample light without reverting the sample light and/or configured to deflect the sample light without inverting the sample light. This embodiment is advantageous in that it enables to reduce the number of optical elements in the static light path. To illustrate, instead of a mirror and an (inline) prism configured to invert and/or revert the sample light, a single sample light deflecting prism that deflects the sample light without reverting or inverting it can be used. This allows for even more compact optical setups. Such sample light deflecting prism may be a Bauernfeind prism or pentaprism, for example. It should be appreciated that the light path may comprise a plurality of sample light deflecting prisms configured to deflect the sample light without reverting the sample light and/or configured to deflect the sample light without inverting the sample light.

In an embodiment, the one or more optical elements comprise at least three lenses, preferably at least four lenses. With three lenses, when positioned appropriately and having appropriate focal distances, two sample light foci can be easily created.

In an embodiment, the light path is provided with
- four and only four lenses and
- two and only two mirrors for reflecting the sample light.

With four lenses, it may be simpler to design a setup that causes two foci, because then simply two telescopes, each telescope being formed by two lenses, can be implemented in the static path. One of these telescopes can be used to focus the sample light on a pinhole or optical slit. In this embodiment, preferably, the light path does not comprise a prism that is configured to invert and/or revert the sample light. Advantageously, the four lenses provide flexibility on how to achieve that the re-scan optical system has a desired optical magnification.

In an embodiment, the light directing element is configured to scan the sample light spot in a first scan direction over the imaging plane. In such embodiment, a reversion or, respectively, inversion of the sample light in said light path may be understood to cause an orientation of the sample light spot in the imaging plane to flip around a line that is perpendicular to said first scan direction and that lies in the imaging plane of the imaging system. In this embodiment, said light path is configured to cause an even number of reversions or, respectively, inversions of the sample light in said light path.

In this embodiment embodiment, the light directing element may further be configured to scan the sample light spot in a second scan direction over the imaging plane different from the first scan direction, e.g. perpendicular to the first scan direction. In such embodiment, an inversion or, respectively, reversion of the sample light in said light path may be understood to cause an orientation of the sample light spot in the imaging plane to flip around a line that is perpendicular to said second scan direction and that lies in the imaging plane of the imaging system. In this embodiment, said light path is configured to cause an even number of inversions or, respectively, reversions of the sample light in said light path.

It should be appreciated that optical elements cause reversion and/or inversions of the sample light in the static path and by suitably combining these optical elements in the static light path, an appropriate number (i.e. an even number) of reversions can be achieved (and an appropriate number of inversions as well if the sample light spot is scanned in two dimensions). To illustrate, a lens pair typically causes one reversion and one inversion of the sample light, (hence, a single lens may be understood to cause 0.5 reversion and 0.5 inversion of the sample light) a pair of spherical mirrors causes three reversions (hence one spherical mirror may be understood to cause 1.5 reversions), a mirror causes one reversion, a pentaprism does not cause any reversion or inversion yet does deflect the sample light, a prism that is used as a mirror causes one reversion of the sample light, a Porro prism does not cause any reversion or inversion of the sample light, a pair of cylindrical mirrors may be understood to cause three reversions of the sample light (hence a cylindrical may be understood to cause 1.5 reversions). Further, a Dove prism causes one reversion (or inversion, depending on its orientation) of the sample light, a Pechan prism causes one reversion and one inversion of the sample light, an Abbe-Koenig prism causes one reversion and one inversion of the sample light, a Porro-abbe prism causes one reversion and one inversion of the sample light, a Double Porro prism causes one reversion and one inversion of the sample light, and a cylindrical lens may be understood to cause 0.5 reversion (or 0.5 inversion depending on its orientation). As said, such building blocks may be suitably combined in the static light path in order to achieve an even number of reversions and, if required, an even number of inversions. This will be explained in more detail with reference to figures 1 - 2F.

In an embodiment, the illumination light spot is a line-shaped illumination light spot. This embodiment enables to quickly scan samples.

In an embodiment, the system comprises a light splitter that is configured to separate the illumination light from the sample light. The light splitter is for example configured to reflect the illumination light towards the sample and let pass the sample light or to reflect the sample light and let pass the illumination light. Preferably, the filter is positioned in the light path.

In an embodiment, the splitter is a dichroic filter, such as a dichroic mirror, for separating the sample light from the illumination light.

In an embodiment, the light path is provided with a pinhole and/or optical slit. This embodiment improves the optical sectioning capabilities of the system. The pinhole and/or optical slit are preferably configured to block sample light coming from regions in the sample that are not in focus of the scan lens. Preferably, the light path is provided with optical elements configured to focus the sample light at the pinhole or optical slit.

In an embodiment, the imaging system is configured to integrate sample light incident at the imaging plane over time. The imaging system may be configured to integrate the sample light that is incident on the imaging plane during a single scan of the sample. Then, preferably, the imaging system is configured to integrate incident sample light over a time period that is equal to a duration of a single scan. The imaging system may be configured to integrate the sample light that is incident on the imaging plane during multiple, e.g. repeated, scans of the sample. Then, preferably, the imaging system is configured to integrate incident sample light over a time period that is longer than the duration of a single scan, for example equal to five scan periods. The imaging system may be configured to integrate the sample light that is incident on the imaging plane during a part of the scan of the sample. Then, preferably, the imaging system is configured to integrate incident sample light over a time period that is shorter than the duration of a single scan. A single scan of the sample as used herein may be understood as the illumination light spot illuminating each position of a region of interest on or in the sample once, whereas for example two scans of the sample may be understood as the illumination light spot illuminating each position of the of the region of interest twice, et cetera.

In an embodiment, the re-scan optical system is configured to move the illumination light spot over and/or through the sample at a first velocity and move the sample light spot over the imaging plane at a second velocity, such that the second velocity is different from, preferably higher than, more preferably approximately twice as high as, a baseline velocity. Herein, the baseline velocity is defined as the first velocity multiplied by the optical magnification of the re-scan optical system. This embodiment allows to increase the resolution of the obtained image as explained in De Luca.

In an embodiment, the system comprises an objective configured to gather the sample light from the sample and focus the sample light on a primary imaging plane of the re-scan microscope system. In such embodiment, the detection optical system may be configured to image images in the primary imaging plane onto the imaging plane of the imaging system, preferably with an optical magnification of approximately 0.5, which would mean that an image of the sample light spot in the primary image plane, see primary image plane 16 in figures 1 and 2, is twice as large as the image of the sample light spot at the imaging plane 44 of the imaging system. This embodiment allows to achieve a sweep factor of M=2 while scanning the illumination light over the primary imaging plane and the sample light over the imaging plane 44 at equal velocities.

One aspect of this disclosure relates to a method for scanning a sample light spot over an imaging plane of an imaging system in order to form an image of a sample using a re-scan optical system as described herein. The method comprises causing the light directing element to scan the illumination light spot over and/or through the sample and de-scan the sample light from the sample and scan the sample light spot over said imaging plane of the imaging system. Additionally or alternatively this method comprises directing the sample light through the light path.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 shows a re-scan optical system comprising a prism according to an embodiment
FIG. 2 shows a re-scan optical system comprising one or more elements that cause at least two foci in the static sample light path;
FIGs 2A - 2C illustrate further re-scan optical systems according to respective further embodiments wherein the light path is provided with a prism configured to invert and/or revert the sample light;
FIGs 2D-2F illustrate further re-scan optical systems according to respective further embodiments wherein the light path is provided with a prism configured to deflect the sample light without reverting the sample light and/or configured to deflect the sample light without inverting the sample light;
FIG. 3 illustrates the scanning of the illumination light spot and re-scanning of the sample light spot according to an embodiment;
FIG. 4 illustrates the scanning of the illumination light spot and re-scanning of the sample light spot with a higher sweep factor according to an embodiment;
FIG. 5 illustrates the scanning of a line-shaped illumination light spot and the re-scanning of the sample light spot according to an embodiment.

### DETAILED DESCRIPTION OF THE DRAWINGS

In the figures identical reference numerals indicate identical or similar elements.

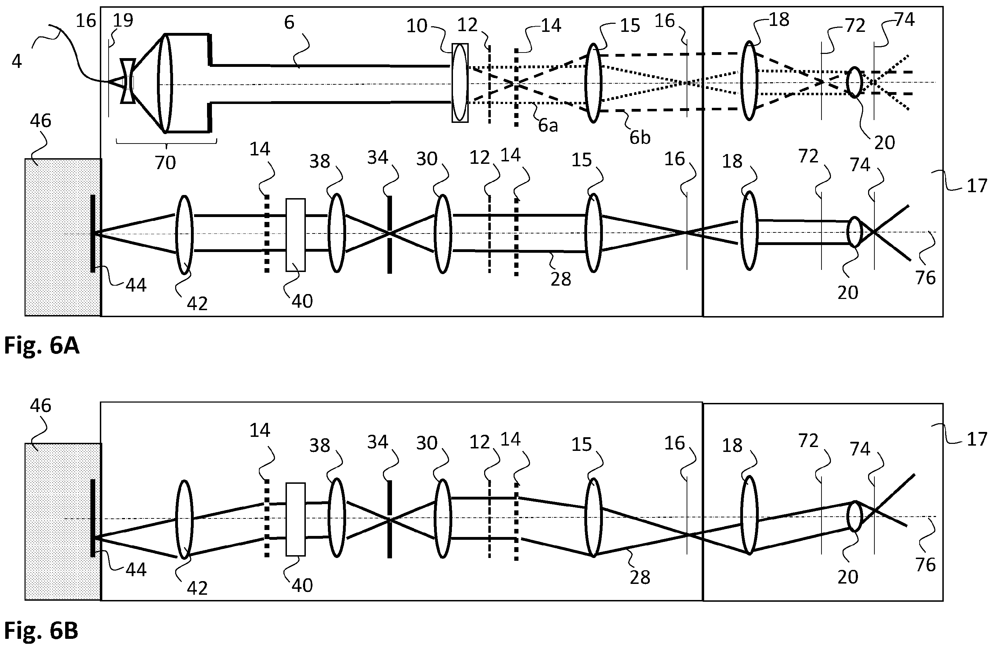

Figure 1 illustrates a re-scan optical system 2, e.g. a re-scan microscope system 2, for forming an image of a sample 22 according to an embodiment. This optical system 2 comprises a light source 4 that is configured to generate illumination light 6. However, it should be appreciated that the re-scan optical system does not per se comprise the light source. The re-scan optical system for example comprises means for receiving illumination light, such as an input connection for an optical fiber that provides the illumination light. The light source 4 may be a laser, such as a solid state laser or diode laser. The light source 4 may comprise a collimator (not shown) that is configured to make a parallel beam with a relatively large diameter, wherein preferably the cross section of the beam has a uniform intensity distribution. The collimator may comprise one or more negative lenses and one or more positive lenses to generate an expanded, collimated beam. Such collimator is shown in figure 6A (see reference numeral 70). In an example, the diameter of the light beam generated by the light source 4 is 10 mm. The sample light 6 is typically light that excites photons in the sample 22 and may therefore also be referred to as excitation light. However, the sample light may also be caused by other effects, such as reflection, Raman effect, Brillouin radiation, et cetera. The illumination light 6 reflects from mirror 8 and hits cylindrical lens 10, which focuses the illumination light onto light direction element 14 herewith causing a horizontal line at mirror 14. Herein, horizontal may be understood to be parallel to the indicated x-z plane. The optical path distance between the cylindrical lens 10 and the aperture of the light source 4 is preferably as close to the focal length of the cylindrical lens 10 as possible

Before the illumination light 6 is incident on light directing element 14, it reflects from dichroic mirror 12. Preferably, dichroic mirror 12 is positioned at a 45 degrees angle with respect to the propagation direction of the incoming illumination light 6, so that the propagation direction of the illumination light 6, upon reflection, changes 90 degrees.

The light directing element 14 reflects the illumination light 6 towards a scan lens 15 that is configured to focus the sample light on a primary image plane 16, also referred to as interface plane 16, of a microscope 17 that comprises a tube lens 18 and objective 20. The re-scan optical system does not per se comprise a microscope. It may for example be configured to make an optical connection with the microscope. In the depicted embodiment, the scan lens 15 creates a vertical line at primary image plane 16. Herein, vertical may be understood to be parallel to the indicated y axis. The distance between the scan lens 15 and light directing element 14 is approximately equal to the focal distance of scan lens 15. In an example, the effective focal distance of scan lens 15 is approximately 75 mm. The scan lens 15 for example has a diameter of 2 inch.

Each microscope may have a different focal length for the tube lens 18. The distance between the primary image plane 16 and the tube lens is preferably equal to the focal distance of the tube lens.

In re-scan microscope systems as described herein, similarly for any microscope system, the objective 20 is preferably the NA-limiting component of the total optical system. NA stands for Numerical Aperture.

The objective 20 is configured to focus the illumination light onto sample 22 herewith causing an illumination light spot 24 on or in the sample 22. The illumination light spot 24 causes sample light 28 from the sample 22. This sample light 28 may be illumination light that is reflected from the sample. However, typically, the illumination light 6 causes photoluminescence, such as fluorescence and/or phosphorescence, in the sample and, typically, the sample light 28 is photo luminescent light, such as fluorescent light and/or phosphorescent light.

The objective 20 is configured to capture the sample light 28 coming from the sample. On the way back, from the objective 20 up to the dichroic filter 12, the sample light 28 travels along the same path as the illumination light 6 did on its way to the sample. In other words, from objective 20 to dichroic filter 12, the sample light path is substantially identical to the illumination light path.

In this embodiment, the sample light 28 passes through filter 12. At the same time, the filter reflects any illumination light that has reflected from sample 22. As such, the filter 12 may be understood to separate the illumination light 6 from the sample light 28.

After having passed through filter 12, the sample light is incident on lens 30. Preferably the distance between lens 30 and the light directing element 14 is approximately equal to the focal length of lens 30. In an example, the focal length of lens 30 is 80 mm.

The lens 30 focuses the sample light 28, via mirror 32, at the optical slit 34. In an example, the optical slit has a width of approximately 50 micrometers and a length of 2-3 cm. After the sample light 28 has passed optical slit 34, it reflects from mirror 36 and meets lens 38. The optical distance between the optical slit 34 and lens 38 is preferably equal to the focal length of lens 38. Lens 38 may be identical to lens 30.

After lens 38, the sample light is incident on prism 40 that inverts and/or reverts the sample light. This prism may be a Dove prism as shown in figure 1. Alternatively, it can be any other type of prism, such as a Pechan prism, Schmidt-Pechan prism, Abbe-Koenig prism, Porro-Abbe prism, double Porro prism. These other types of prisms can be positioned between lens 38 and rescanning mirror 14, just as the Dove prism 40. The prism 40 is configured to revert and/or invert the sample light, and thus also revert and/or invert the sample light spot 63 in the imaging plane 44, in such manner that the sample light spot is moved in the correct direction.

After prism 40, the sample light is incident on light directing element 14 again. The optical distance between lens 38 and light directing element 14 is preferably close, e.g. equal, to the focal length of lens 38. In this embodiment, the sample light 28 hits the light directing element 14 at a different angle than the angle at which the illumination light 6 hits the light directing element. When the sample light 28 hits the light directing element 14, the light directing element 14 functions as a re-scanner that scans the sample light 28 over the imaging plane 44 of imaging system 46.

Thus, the static sample light path in the embodiment of figure 1 is provided with
- two, and only two, lenses and
- two, and only two, mirrors for reflecting the sample light and
- said prism.

The imaging system for example comprises a camera, such as a CCD camera. The imaging plane preferably comprises a plurality of pixels that are arranged in a predefined manner, e.g. in a 2D lattice.

Before the sample light 28 reaches imaging plane 44, it is incident on a re-scan lens 42 that is configured to focus the sample light onto the imaging plane 44. Preferably, the distance between the light directing element 14 and lens 42 is equal to the focal length of lens 42. In an embodiment lens 42 is identical to lens 15. Lens 42 may have a focal length of 75 mm.

The optical magnification of the re-scan microscope system may be understood to be determined by the optical magnification provided by the combination of objective 20 and tube lens 18, referred to as M_{micr} in De Luca, and by the optical magnification M₂ of the detection optical system. In the depicted embodiment, the optical magnification of the detection optical system is determined by scan lens 15, lenses 30 and 38 and re-scan lens 42. In the depicted embodiment, the optical magnification M₂ of the detection optical system is given by M₂ = (f_30 * f_42) / (f_15 * f_38), wherein f_x denotes the focal length of lens x.

It should be appreciated that the velocity of an image of the sample light spot in primary image plane 16, v_16, is given by the multiplication of a first velocity, v_1, i.e. the actual velocity of the illumination light spot 24 over and/or through the sample 22, with the optical magnification of the combination of objective 30 and tube lens 28, i.e. v_16 = v_1 x M_{micr}.

The baseline velocity, v_B, in the depicted embodiment is then given by v_B = v_1 x M_{micr} x M₂.

In one embodiment, the second velocity, i.e. the velocity with which the sample light spot moves over the imaging plane 44, is approximately twice as high as the baseline velocity, v_2 ≈ 2 x v_B. Note that the second velocity is equal to the velocity with which the image 60 of the illumination light spot in the imaging plane 44 moves over the imaging plane 44. This can for example be achieved by configuring the detection optical system such that it images an image in the primary image plane 16 onto the imaging plane 44 of the imaging system 46 with an optical magnification of approximately 0.5, M₂ ≈ 0.5. In this manner, the second velocity is twice as high as the baseline velocity if v_16 and v_2 are equal.

As described in De Luca, the so called sweep factor M is preferably approximately equal to 2. In the depicted embodiment, the respective amplitudes of the scanning and re-scanning mirror are the same, of course, because the same mirror is used as scanning and re-scanning mirror. Therefore, in the depicted embodiment, the sweep factor M is given by M = (f_38) / (f_30).

In figure 1, the illumination optical system comprises, mirror 8, lens 10, dichroic mirror 12, scanning mirror 14, scan lens 15. The detection optical system in figure 1 comprises scan lens 15, scanning mirror 14, which in the context of detection may also be referred to as de-scanning mirror 14, dichroic mirror 12, lens 30, mirror 32, optical slit 34, mirror 36, lens 38, prism 40, scanning mirror 14, which in the context of detection may also be referred to as re-scanning mirror 14 and lens 42.

The duration of a single scan may be between 25 ms and 10 seconds.

In the embodiment of figure 1, the lenses 30 and 38 cause a focus of the sample light in the static sample light path, in particular at the optical slit 34. Hence, the two lenses 30 and 38 cause an inversion and a reversion of the sample light (and thus a reversion and inversion of the sample light spot at the imaging plane 44). Further, mirror 32 causes a reversion, mirror 36 causes a reversion and prism 40 causes another reversion of the sample light. Hence, in the static sample light path, the sample light is reversed four times and inverted once. In the depicted embodiment we may assume that a reversion flips the sample light spot's orientation in the imaging plane 44 around a vertical axis and that an inversion flips the sample light spot's orientation around a horizontal axis, while the sample light spot is only scanned in the horizontal direction. Therefore, the number of reversions of the sample light in the static sample light path should be even and the number of inversions may be any number. Since the sample light is reversed four times in the static sample light path, this is correct.

Figure 2 shows a re-scan optical system according to another embodiment. In this embodiment, the static sample light path is provided with four and only four lenses and two and only two mirrors for reflecting the sample light. In this embodiment, the static sample light path from light directing element 14 back to light directing element 14 namely comprises four lenses 30, 38, 48, 49 and two mirrors 32 and 36. In this particular embodiment, the static sample light path does not comprise a prism.

It should be appreciated that the two additional lenses 48 and 49 introduce an additional inversion and an additional reversion in the static sample light path and thus also influence the orientation of the sample light spot in the imaging plane. Hence, these lenses cause that the scanning direction of the sample light spot at the imaging plane 44 is correct.

In particular, the four lenses 30, 38, 48 and 49 cause two foci of the sample light in the static sample light path. Hence, in the depicted embodiment, the four lenses together cause two reversions and two inversions and mirror 32 causes a reversion and mirror 36 causes a reversion. Hence, in this static path, the sample light 28 is reversed four times and inverted twice. In the depicted embodiment, we may assume that a reversion causes a flip of the sample light spot around a vertical line whereas the sample light spot is horizontally scanned. Thus, in light of the above, the number of reversions of the sample light in the static sample light path should be even, which it is, because there are four reversions of the sample light in the static sample light path.

In this embodiment, the sweep factor M as defined in De Luca is given by M = (f_38 * f_49) / (f_30 * f_48). This formula shows that the additional two lenses 48 and 49 provide flexibility in how to achieve a desired sweep factor of for example M=2. If for example, lenses 30 and 38 are identical, then a sweep factor of M=2 can be obtained by selecting the focal length of lens 49 twice as large as the focal length of lens 48.

In figure 2, the illumination optical system comprises mirror 8, lens 10, dichroic mirror 12, scanning mirror 14 and scan lens 15. The detection optical system in figure 2 comprises the scan lens 15, scanning mirror 14, which in the context of detection may also be referred to as de-scanning mirror 14, dichroic mirror 12, lens 30, mirror 32, optical slit 34, mirror 36, lens 38, lens 48, lens 49, scanning mirror 14, which in the context of detection may also be referred to as re-scanning mirror 14 and re-scan lens 42.

Figure 2A illustrates an embodiment wherein the light path is provided with a prism that is configured to invert and/or revert the sample light. In this embodiment, a Schmidt-Pechan prism 39a is used (only schematically shown). As a side note, in this embodiment, two prisms 29a and 29b are used to deflect the sample light. As explained above, the number of reversions in the static light path should be even in this embodiment. The number of inversions in the static light path are irrelevant, since sample light is only scanned in one direction, because the sample light spot is a line-shaped. The lens pair 30 and 38 may be understood to cause one reversion (because they cause a focus at the slit 34), prism 29a causes one reversion, prism 29b causes one reversion, and the Schimdt-Pechan prism 39a causes one reversion as well. Thus the total number of reversions of sample light in the static light path is four, an even number and therefore correct.

Figure 2B illustrates an embodiment wherein the light path is provided with a prism that is configured to invert and/or revert the sample light. In this embodiment, an Abbe-Koenig prism 39b is used (only shown schematically). In this embodiment, a convex mirror 29c and a regular mirror 36 are used to deflect the sample light. The number of reversions is four: the convex mirror together with the lens 38 causes two reversions, the mirror 36 causes one reversion, and the Abbe-Koenig prism 39b causes one reversion of the sample light. Of course, any other prims could be used in this embodiment that causes one reversion of the sample light.

Figure 2C illustrates an embodiment wherein the light path is provided with a prism that is configured to invert and/or revert the sample light. In this embodiment, an Abbe-Koenig prism 39b is used (only shown schematically). In this embodiment, a convex mirror 29c and a convex mirror 29d are used to deflect the sample light. The number of reversions is four: the convex mirrors 29c and 29d cause three reversions of the sample light, and the Abbe-Koenig prism 39b causes one reversion of the sample light. Of course, any other prims could be used in this embodiment that causes one reversion of the sample light.

Figure 2D illustrates an embodiment wherein the static light path is provided with a sample light deflecting prism 35 configured to deflect the sample light without reverting the sample light and/or configured to deflect the sample light without inverting the sample light. In this embodiment, the sample light deflecting prism 35 is a Bauernfeind prism. Such prism deflects the sample light without reverting or inverting the sample light. The total number of reversions of the sample light in the static light path is two: the lens pair 30 and 38 causes one reversion, the prism 35 does not cause a reversion and the mirror 36 causes one reversion.

Figure 2E illustrates an embodiment wherein the static light path is provided with a sample light deflecting prism 37 configured to deflect the sample light without reverting the sample light and/or configured to deflect the sample light without inverting the sample light. In this embodiment, the sample light deflecting prism 37 is a pentaprism. Such prism deflects the sample light without reverting or inverting the sample light. The total number of reversions of the sample light in the static light path is two: the lens pair 30 and 38 causes one reversion, the prism 37 does not cause a reversion and the mirror 32 causes one reversion.

Figure 2F is the same embodiment as figure 2E with the only difference that the lens pair creates a focus of the sample light at mirror 32 and that slit is present on the mirror.

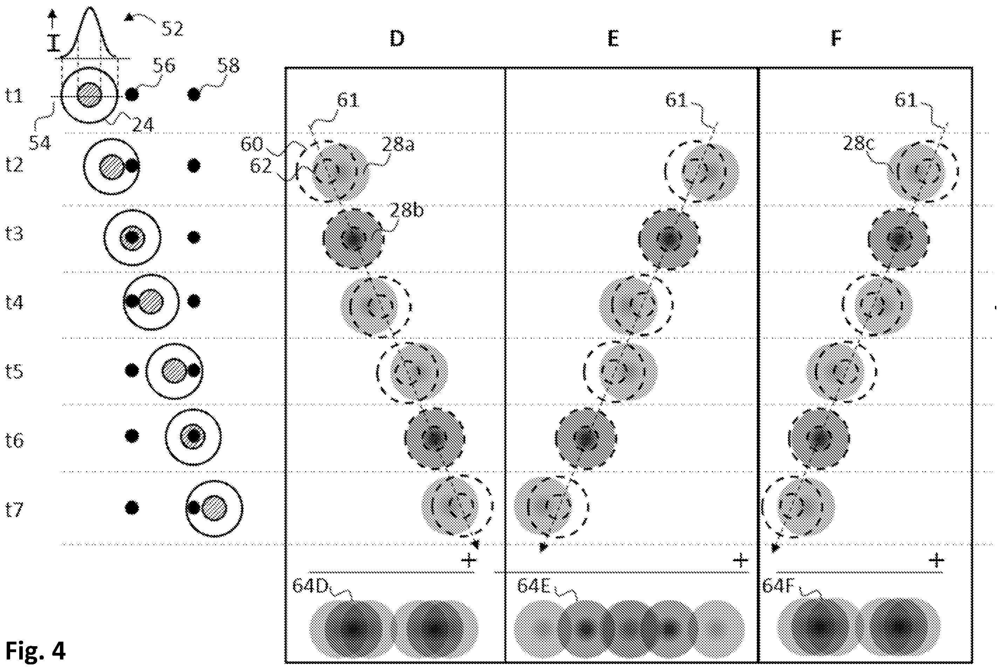

Figure 4 schematically illustrates what happens if the sweep factor M, referred to in De Luca, is equal to 2, M=2. As in figure 3, the left hand side of the figure shows what happens on the sample 22. The illumination light spot 24 scans over the sample and illuminates first particle 56 and then particle 58. Further, columns D, E and F illustrate what may happen at the imaging plane 44 depending on the direction of movement of the sample light spot (and thus the direction of movement of the illumination light spot image 60), over the imaging plane 44 and depending on the orientation of the sample light spot (and thus on the orientation of the image 60 of the illumination light spot).

Columns D and F illustrate respective examples where the direction of movement of the illumination light spot image is correct. Column E illustrates an example wherein the direction of movement of the illumination light spot image 60 is incorrect. The obtained image 64E of column E is highly distorted. However results 64D and 64F, which are mirror images of each other, each clearly show two high intensity regions that respectively correspond to particles 56 and 58. This illustrates that a sweep factor higher than 1, preferably a sweep factor of approximately 2 (see De Luca) yields better images in terms of sharpness. Images 64D and 64F obtained with M=2 are better than images 64A and 64C obtained with M=1. Whereas in images 64A and 64C no two separate high intensity regions can be distinguished, which would correspond with the two particles 56 and 58, in images 64D and 64F two high intensity regions can be distinguished.

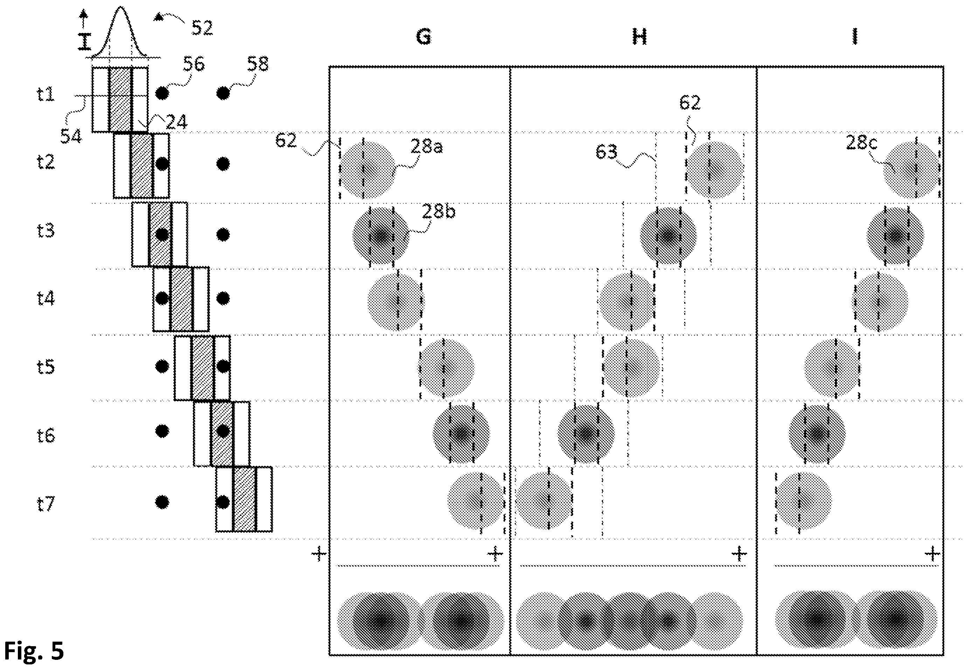

Figure 5 illustrates an embodiment wherein the illumination light spot 24 is a line-shaped illumination light spot. Such an illumination light spot is for example formed by the embodiments shown in figures 1 and 2. An advantage of a line-shaped illumination light spot is that it enables to quickly scan a sample.

Such line-shaped illumination light spot 24 also has a spatial intensity distribution. Reference numeral 52 indicates the light intensity in the illumination light 24 along line 54.

Similarly as in figures 3 and 4, the right hand side of figure 5 indicates in three columns G, H and I what may happen at the imaging plane 44 of imaging system 46. In particular, the position of sample light 28 is shown at different time instances t1 - t7. Also indicated is the image 62, in the imaging plane 44, of the high intensity region of the line-shaped illumination light spot 24. Image 62 indicates where in the imaging plane 44 the (high intensity region of) illumination light that has been reflected from sample 22 would be positioned, were it not that reflected illumination light is blocked by a filter, e.g. by dichroic mirror 12. Further shown is the (line-shaped) sample light spot 63. The dashed-dotted lines indicate the boundaries of the sample light spot 63. For clarity, the sample light spot 63 is only shown in column H, in truncated form. It should be appreciated that 63 is a center region of both the illumination light spot image (not indicated in figure 5) and the sample light spot 63.

Figure 6A illustrates the optical train of the re-scan optical system of figure 1 The top part of figure 6A shows the optical train of the illumination light and the bottom part of figure 6A the optical train of the sample light. Herein, 6a and 6b depict the illumination light as viewed from two orthogonal directions respectively. These views differ because cylindrical lens 10 causes a line focus in 14, and not a point focus, which ultimately results in a line-shaped illumination light spot at the sample

In this embodiment, plane 14, i.e. the light directing element, is a conjugate plane of the back focal plane 72 of the microscope 17. Further, planes 19, 16, 34 (the aperture slit), are conjugate planes of the focal plane of the microscope 17, i.e. the plane at which the illumination light is focused.

Figure 6B illustrates the optical train for off-axis sample light originating from the sample. The optical axis is indicated by 76.

As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A re-scan optical system (2) for scanning a sample light spot (63) over an imaging plane (44) of an imaging system (46) in order to form an image of a sample (22), comprising
an illumination optical system configured to direct, and optionally focus, illumination light (6) at the sample (22) therewith providing an illumination light spot (24) at the sample, the illumination light spot (24) causing sample light (28),
a detection optical system configured to focus at least part of the sample light (28) onto an imaging plane (44) of an imaging system (46) herewith causing a sample light spot (63) on the imaging plane (44)
wherein the system (2) further comprises a light directing element (14) configured to scan the illumination light spot (24) over and/or through the sample (22) and de-scan the sample light (28) from the sample (22) and scan the sample light spot (63) over said imaging plane (44) of the imaging system, **characterized in that**
the detection optical system is configured to direct the de-scanned sample light along a light path running from the light directing element (14) back to the light directing element (14) so that the light directing element (14) can perform said scanning of the sample light spot (63) over said imaging plane (44), wherein
- the light path is provided with a prism (39a, 39b, 40) configured to invert and/or revert the sample light, and/or wherein
- the re-scan optical system comprises one or more optical elements (30, 38, 48, 49) that is or are configured to cause at least two foci of the sample light (28) in said light path, and/or wherein
- the light path is provided with a sample light deflecting prism (35, 37) configured to deflect the sample light (28) without reverting the sample light (28) and/or configured to deflect the sample light (28) without inverting the sample light (28).

2. The re-scan optical system (2) according to claim 1, wherein the light path is provided with a prism (39a, 39b, 40) configured to invert and/or revert the sample light.

3. The re-scan optical system (2) according to claim 2, wherein the light path is provided with
- two, and only two, lenses and
- two, and only two, mirrors for reflecting the sample light and
- said prism.

4. The re-scan optical system (2) according to claim 2 or 3, wherein said prism is a Dove prism or a Pechan prism or a Schmidt-Pechan prism or an Abbe-Koenig prism or a Porro-Abbe prism or a double Porro prism.

5. The re-scan optical system (2) according to any of the preceding claims, wherein the light path is provided with a sample light deflecting prism (35, 37) configured to deflect the sample light without reverting the sample light and/or configured to deflect the sample light without inverting the sample light.

6. The re-scan optical system (2) according to according to claim 5, wherein the sample light deflecting prism is a pentaprism or Bauernfeind prism.

7. The re-scan optical system (2) according to any of the preceding claims, wherein
the light directing element (14) is configured to scan the sample light spot (63) in a scan direction over the imaging plane (44), wherein
a reversion or, respectively, inversion of the sample light (28) in said light path causes an orientation of the sample light spot in the imaging plane to flip around a line that is perpendicular to said scan direction and that lies in the imaging plane (44) of the imaging system, wherein
said light path is configured to cause an even number of reversions or, respectively, inversions of the sample light (28) in said light path.

8. The re-scan optical system (2) according to any of the preceding claims, wherein the illumination light spot (63) is a line-shaped illumination light spot.

9. The re-scan optical system (2) according to any of the preceding claim, further comprising a light splitter (12) that is configured to separate the illumination light from the sample light.

10. The re-scan optical system (2) according to any of the preceding claims, wherein said light path is provided with a pinhole and/or optical slit.

11. The re-scan optical system (2) according to any of the preceding claims, wherein the imaging system is configured to integrate sample light incident at the imaging plane over time.

12. The re-scan optical system (2) according to any of the preceding claims, wherein the re-scan optical system is configured to move the illumination light spot (24) over and/or through the sample (22) at a first velocity and move the sample light spot (63) over the imaging plane (44) at a second velocity, such that the second velocity is different from, preferably higher than, more preferably approximately twice as high as, a baseline velocity, wherein
the baseline velocity is defined as the first velocity multiplied by the optical magnification of the re-scan optical system.

13. The re-scan optical system (2) according to any of the preceding claims, further comprising
an objective (20) configured to gather the sample light from the sample and focus the sample light on a primary imaging plane of the re-scan microscope system, wherein
the detection optical system is configured to image images in the primary imaging plane onto the imaging plane of the imaging system, preferably with an optical magnification of approximately 0.5.

14. A method for scanning a sample light spot (63) over an imaging plane (44) of an imaging system in order to form an image of a sample (22) using a re-scan optical system (2) according to any of the preceding claims, the method comprising
causing the light directing element (14) to scan the illumination light spot (24) over and/or through the sample (22) and de-scan the sample light (28) from the sample (22) and scan the sample light spot (63) over said imaging plane (44) of the imaging system and/or
directing the sample light (28) through said light path.

## Patentansprüche

1. Rescanoptiksystem (2) zum Scannen eines Probenlichtflecks (63) über eine Abbildungsebene (44) eines Abbildungssystems (46), um ein Bild einer Probe (22) zu bilden, aufweisend
ein Beleuchtungsoptiksystem, das dazu ausgebildet ist, Beleuchtungslicht (6) auf die Probe (22) zu richten und optional zu fokussieren, wodurch ein Beleuchtungslichtfleck (24) an der Probe bereitgestellt wird, wobei der Beleuchtungslichtfleck (24) Probenlicht (28) erzeugt,
ein Detektionsoptiksystem, das dazu ausgebildet ist, zumindest einen Teil des Probenlichtes (28) auf eine Abbildungsebene (44) eines Abbildungssystems (46) zu fokussieren, wodurch ein Probenlichtfleck (63) auf der Abbildungsebene (44) erzeugt wird,
wobei das System (2) weiterhin ein Licht richtendes Element (14) aufweist, das dazu ausgebildet ist, den Beleuchtungslichtfleck (24) über und/oder durch die Probe (22) zu scannen und das Probenlicht (28) von der Probe (22) zu entscannen, und den Probenlichtfleck (63) über die Abbildungsebene (44) des Abbildungssystems zu scannen, **dadurch gekennzeichnet, dass**
das Detektionsoptiksystem dazu ausgebildet ist, das weggescannte Probenlicht entlang eines Lichtpfades zu richten, der von dem Licht richtenden Element (14) zurück zu dem Licht richtenden Element (14) verläuft, so dass das Licht richtende Element (14) das genannte Scannen des Probenlichtflecks (63) über die Abbildungsebene (44) durchführen kann, wobei
- der Lichtpfad mit einem Prisma (39a, 39b, 40) bereitgestellt ist, das dazu ausgebildet ist, das Probenlicht zu invertieren und/oder umzukehren, und/oder wobei
- das Rescanoptiksystem ein oder mehrere optische Elemente (30, 38, 48, 49) aufweist, das oder die dazu ausgebildet ist bzw. sind, zumindest zwei Brennpunkte des Probenlichts (28) in dem Lichtpfad zu erzeugen, und/oder wobei
- der Lichtpfad mit einem Probenlichtablenkprisma (35, 37) bereitgestellt ist, das dazu ausgebildet ist, das Probenlicht (28) abzulenken, ohne das Probenlicht (28) umzukehren, und/oder dazu ausgebildet ist, das Probenlicht (28) abzulenken, ohne das Probenlicht (28) zu invertieren.

2. Rescanoptiksystem (2) nach Anspruch 1, wobei der Lichtpfad mit einem Prisma (39a, 39b, 40) bereitgestellt ist, das dazu ausgebildet ist, das Probenlicht zu invertieren und/oder umzukehren.

3. Rescanoptiksystem (2) nach Anspruch 2, wobei der Lichtpfad mit
- zwei und nur zwei Linsen und
- zwei und nur zwei Spiegeln zum Reflektieren des Probenlichts und
- dem genannten Prisma
bereitgestellt ist.

4. Rescanoptiksystem (2) nach Anspruch 2 oder 3, wobei das Prisma ein Dove-Prisma oder ein Pechan-Prisma oder ein Schmidt-Pechan-Prisma oder ein Abbe-König-Prisma oder ein Porro-Abbe-Prisma oder ein Doppel-Porro-Prisma ist.

5. Rescanoptiksystem (2) nach irgendeinem der vorhergehenden Ansprüche, wobei der Lichtpfad mit einem Probenlicht-Ablenkprisma (35, 37) bereitgestellt ist, das dazu ausgebildet ist, das Probenlicht abzulenken, ohne das Probenlicht umzukehren, und/oder dazu ausgebildet ist, das Probenlicht abzulenken, ohne das Probenlicht zu invertieren.

6. Rescanoptiksystem (2) nach Anspruch 5, wobei das Probenlicht-Ablenkprisma ein Penta-Prisma oder ein Bauernfeind-Prisma ist.

7. Rescanoptiksystem (2) nach irgendeinem der vorhergehenden Ansprüche, wobei
das Licht richtende Element (14) dazu ausgebildet ist, den Probenlichtfleck (63) in einer Scanrichtung über die Abbildungsebene (44) zu scannen, wobei
eine Umkehrung bzw. Invertierung des Probenlichts (28) in dem Lichtpfad bewirkt, dass eine Orientierung des Probenlichtflecks in der Abbildungsebene um eine Linie herum springt, die senkrecht zu der Scanrichtung verläuft und die in der Abbildungsebene (44) des Abbildungssystems liegt, wobei
der genannte Lichtpfad dazu ausgebildet ist, eine gerade Anzahl von Umkehrungen bzw. Invertierungen des Probenlichts (28) in dem Lichtpfad zu bewirken.

8. Rescanoptiksystem (2) nach irgendeinem der vorhergehenden Ansprüche, wobei der Beleuchtungslichtfleck (23) ein linienförmiger Beleuchtungslichtfleck ist.

9. Rescanoptiksystem (2) nach irgendeinem der vorhergehenden Ansprüche, weiterhin aufweisend einen Lichtteiler (12), der dazu ausgebildet ist, das Beleuchtungslicht von dem Probenlicht zu trennen.

10. Rescanoptiksystem (2) nach irgendeinem der vorhergehenden Ansprüche, wobei der Lichtpfad mit einer Lochblende und/oder einem optischen Spalt bereitgestellt ist.

11. Rescanoptiksystem (2) nach irgendeinem der vorhergehenden Ansprüche, wobei das Abbildungssystem dazu ausgebildet ist, Probenlicht, das auf die Abbildungsebene einfällt, über die Zeit zu integrieren.

12. Rescanoptiksystem (2) nach irgendeinem der vorhergehenden Ansprüche, wobei das Rescanoptiksystem dazu ausgebildet ist, den Beleuchtungslichtfleck (24) über und/oder durch die Probe (22) mit einer ersten Geschwindigkeit und den Probenlichtfleck (63) über die Abbildungsebene (44) mit einer zweiten Geschwindigkeit zu bewegen, derart, dass die zweite Geschwindigkeit von einer Basisgeschwindigkeit verschieden ist, vorzugsweise höher ist als diese, weiter vorzugsweise etwa zweimal so hoch ist wie diese, wobei
die Basisgeschwindigkeit als die erste Geschwindigkeit multipliziert mit der optischen Vergrößerung des Rescanoptiksystems definiert ist.

13. Rescanoptiksystem (2) nach irgendeinem der vorhergehenden Ansprüche, weiterhin aufweisend
ein Objektiv (20), das dazu ausgebildet ist, das Probenlicht von der Probe zu sammeln und das Probenlicht auf eine primäre Abbildungsebene des Rescanmikroskopsystems zu fokussieren, wobei
das Detektionsoptiksystem dazu ausgebildet ist, Bilder in der primären Abbildungsebene auf die Abbildungsebene des Abbildungssystems abzubilden, vorzugsweise mit einer optischen Vergrößerung von etwa 0,5.

14. Verfahren zum Scannen eines Probenlichtflecks (63) über eine Abbildungsebene (44) eines Abbildungssystems, um ein Bild einer Probe (22) unter Verwendung eines Rescanoptiksystems (2) nach irgendeinem der vorhergehenden Ansprüche zu bilden, wobei das Verfahren aufweist:
Veranlassen des Licht richtenden Elements (14), den Beleuchtungslichtfleck (24) über und/oder durch die Probe (22) zu scannen und das Probenlicht (28) von der Probe (22) zu entscannen und den Probenlichtfleck (63) über die Abbildungsebene (44) des Abbildungssystems zu scannen und/oder
Richten des Probenlichts (28) durch den genannten Lichtpfad.

## Revendications

1. Système optique de re-balayage (2) pour balayer un point lumineux d'échantillon (63) sur un plan d'imagerie (44) d'un système d'imagerie (46) afin de former une image d'un échantillon (22), comprenant
un système optique d'éclairage configuré pour diriger, et facultativement focaliser, une lumière d'éclairage (6) sur l'échantillon (22), fournissant ainsi un point lumineux d'éclairage (24) sur l'échantillon, le point lumineux d'éclairage (24) provoquant une lumière d'échantillon (28), un système optique de détection configuré pour focaliser au moins une partie de la lumière d'échantillon (28) sur un plan d'imagerie (44) d'un système d'imagerie (46) provoquant ainsi un point lumineux d'échantillon (63) sur le plan d'imagerie (44),
dans lequel le système (2) comprend en outre un élément de direction de lumière (14) configuré pour balayer le point lumineux d'éclairage (24) sur et/ou à travers l'échantillon (22) et dé-balayer la lumière d'échantillon (28) de l'échantillon (22) et balayer le point lumineux d'échantillon (63) sur ledit plan d'imagerie (44) du système d'imagerie, **caractérisé en ce que**
le système optique de détection est configuré pour diriger la lumière d'échantillon dé-balayée le long d'un trajet lumineux allant de l'élément de direction de lumière (14) de retour à l'élément de direction de lumière (14) de sorte que l'élément de direction de lumière (14) puisse effectuer ledit balayage du point lumineux d'échantillon (63) sur ledit plan d'imagerie (44), dans lequel
- le trajet lumineux est pourvu d'un prisme (39a, 39b, 40) configuré pour inverser et/ou retourner la lumière d'échantillon, et/ou dans lequel
- le système optique de re-balayage comprend un ou plusieurs éléments optiques (30, 38, 48, 49) qui sont configurés pour provoquer au moins deux foyers de la lumière d'échantillon (28) dans ledit trajet lumineux, et/ou dans lequel
- le trajet lumineux est pourvu d'un prisme de déviation de lumière d'échantillon (35, 37) configuré pour dévier la lumière d'échantillon (28) sans retourner la lumière d'échantillon (28) et/ou configuré pour dévier la lumière d'échantillon (28) sans inverser la lumière d'échantillon (28).

2. Système optique de re-balayage (2) selon la revendication 1, dans lequel le trajet lumineux est pourvu d'un prisme (39a, 39b, 40) configuré pour inverser et/ou retourner la lumière d'échantillon.

3. Système optique de re-balayage (2) selon la revendication 2, dans lequel le trajet lumineux est pourvu de
- deux, et seulement deux, lentilles et
- deux, et seulement deux, miroirs pour réfléchir la lumière d'échantillon et
- ledit prisme.

4. Système optique de re-balayage (2) selon la revendication 2 ou 3, dans lequel ledit prisme est un prisme Dove ou un prisme Pechan ou un prisme Schmidt-Pechan ou un prisme Abbe-Koenig ou un prisme Porro-Abbe ou un prisme Porro double.

5. Système optique de re-balayage (2) selon l'une quelconque des revendications précédentes, dans lequel le trajet lumineux est pourvu d'un prisme de déviation de lumière d'échantillon (35, 37) configuré pour dévier la lumière d'échantillon sans retourner la lumière d'échantillon et/ou configuré pour dévier la lumière d'échantillon sans inverser la lumière d'échantillon.

6. Système optique de re-balayage (2) selon la revendication 5, dans lequel le prisme de déviation de lumière d'échantillon est un pentaprisme ou un prisme Bauernfeind.

7. Système optique de re-balayage (2) selon l'une quelconque des revendications précédentes, dans lequel
l'élément de direction de lumière (14) est configuré pour balayer le point lumineux d'échantillon (63) dans une direction de balayage sur le plan d'imagerie (44), dans lequel
un retournement ou, respectivement, une inversion de la lumière d'échantillon (28) dans ledit trajet lumineux provoque une orientation du point lumineux d'échantillon dans le plan d'imagerie pour tourner autour d'une ligne qui est perpendiculaire à ladite direction de balayage et qui se trouve dans le plan d'imagerie (44) du système d'imagerie, dans lequel
ledit trajet lumineux est configuré pour provoquer un nombre pair de retournements ou, respectivement, d'inversions de la lumière échantillon (28) dans ledit trajet lumineux.

8. Système optique de re-balayage (2) selon l'une quelconque des revendications précédentes, dans lequel le point lumineux d'éclairage (63) est un point lumineux d'éclairage en forme de ligne.

9. Système optique de re-balayage (2) selon l'une quelconque des revendications précédentes, comprenant en outre un séparateur de lumière (12) qui est configuré pour séparer la lumière d'éclairage de la lumière d'échantillon.

10. Système optique de re-balayage (2) selon l'une quelconque des revendications précédentes, dans lequel ledit trajet lumineux est pourvu d'un sténopé et/ou d'une fente optique.

11. Système optique de re-balayage (2) selon l'une quelconque des revendications précédentes, dans lequel le système d'imagerie est configuré pour intégrer la lumière d'échantillon incidente au plan d'imagerie au fil du temps.

12. Système optique de re-balayage (2) selon l'une quelconque des revendications précédentes, dans lequel le système optique de re-balayage est configuré pour déplacer le point lumineux d'éclairage (24) au-dessus et/ou à travers l'échantillon (22) à une première vitesse et déplacer le point lumineux d'échantillon (63) au-dessus du plan d'imagerie (44) à une seconde vitesse, de sorte que la seconde vitesse soit différente de, de préférence supérieure à, de manière davantage préférée environ deux fois supérieure à, une vitesse de référence, dans lequel la vitesse de référence est définie comme la première vitesse multipliée par le grossissement optique du système optique de re-balayage.

13. Système optique de re-balayage (2) selon l'une quelconque des revendications précédentes, comprenant en outre un objectif (20) configuré pour collecter la lumière d'échantillon à partir de l'échantillon et focaliser la lumière d'échantillon sur un plan d'imagerie primaire du système de microscope de re-balayage, dans lequel
le système optique de détection est configuré pour imager des images dans le plan d'imagerie primaire sur le plan d'imagerie du système d'imagerie, de préférence avec un grossissement optique d'environ 0,5.

14. Procédé de balayage d'un point lumineux d'échantillon (63) sur un plan d'imagerie (44) d'un système d'imagerie afin de former une image d'un échantillon (22) à l'aide d'un système optique de re-balayage (2) selon l'une quelconque des revendications précédentes, le procédé comprenant
le fait d'amener l'élément de direction de lumière (14) à balayer le point lumineux d'éclairage (24) sur et/ou à travers l'échantillon (22) et à dé-balayer la lumière d'échantillon (28) de l'échantillon (22) et à balayer le point lumineux d'échantillon (63) sur ledit plan d'imagerie (44) du système d'imagerie et/ou
la direction de la lumière d'échantillon (28) à travers ledit trajet lumineux.
